# EUROPÄISCHE PATENTSCHRIFT

(11) **EP 0 982 178 B1**
(45) Veröffentlichungstag und Bekanntmachung des Hinweises auf die Patenterteilung: **05.11.2003**
(21) Anmeldenummer: 99112999.0
(22) Anmeldetag: 06.07.1999
(51) Int. Cl.: B60N 2/24, B60N 2/23, B60N 2/427

(54) **Fahrgastsitz für ein Personenbeförderungsfahrzeug mit biegesteifer Rückenlehne**
Passenger seat for a passenger transport vehicle with a backrest resistant to bending
Siège de passager pour un véhicule de transport de passagers à dossier résistant à la flexion

(30) Priorität: 28.08.1998 DE 19839323
(43) Veröffentlichungstag der Anmeldung: 01.03.2000
(73) Patentinhaber: Vogelsitze GmbH, 76228 Karlsruhe (DE)
(72) Erfinder: Ehemann, Ernst K., Dipl.-Ing., 76227 Karlsruhe (DE); Bilfinger, Jan, 69509 Mörlenbach (DE)
(74) Vertreter: Dimmerling, Heinz, Dipl.-Ing.

(56) Entgegenhaltungen:
- EP-A- 0 543 049
- DE-A- 2 136 107
- DE-A- 2 708 461
- DE-A- 4 031 285
- DE-U- 29 507 216
- US-A- 4 366 984

## Beschreibung

Die Erfindung betrifft einen Fahrgastsitz für ein Personenbeförderungsfahrzeug nach dem Oberbegriff des Anspruchs 1, mit einem Sitzteil und einer Rückenlehne, welche zwei um eine Achse schwenkbar angeordnete stabförmige Trägerelemente aufweist, von denen wenigstens eines zur Begrenzung der Schwenkbewegung gegen einen Anschlag stößt.

Ein derartiger Fahrgastsitz ist beispielsweise aus der DE 295 07 216 U1 bekannt. Der bekannte Fahrgastsitz weist einen U-förmig gebogenen Rohrrahmen auf, an welchem seitlich flache, in Verstellrichtung der Rückenlehne verlaufende Verstärkungsteile angeschweißt sind. Durch die Verstärkungsteile soll der Rohrrahmen soweit verstärkt werden, daß er beispielsweise bei einem Unfall auftretenden Maximalbeschleunigungen standhält. Durch die Verstärkung wird der bekannte Fahrgastsitz gemäß der genannten Druckschrift soweit verstärkt, daß im Kopfbereich der Rükkenlehne eine Umlenklasche für einen Sicherheitsgurt befestigt werden kann.

Zwar dürfte durch die Verstärkungsteile die Biegesteifigkeit der Rückenlehne des bekannten Fahrgastsitzes soweit erhöht werden, daß die Rückenlehne den durch die Umlenklasche des Sicherheitsgurtes in sie eingeleiteten Kräften standhält, jedoch dürften die aus Sicherheitsgründen gestellten Anforderungen in Bezug auf eine gewünschte Nachgiebigkeit der Rückenlehne gestellten Anforderungen nur schwerlich erfüllt werden. Denn im Hinblick auf die Verletzungsgefahr eines bei einem Unfall von hinten auf die Rückenlehne aufprallenden Fahrgasts darf die Rückenlehne nur eine begrenzte Biegesteifigkeit aufweisen. So wird gefordert, daß die Rückenlehne bei einem Aufprall von hinten nach vorne nachgibt. Dies steht aber im Widerspruch zu einer im Hinblick auf die Anbringung einer Umlenklasche eines Sicherheitsgurtes an die Rückenlehne geforderten maximalen Biegesteifigkeit.

Es ist Aufgabe der Erfindung einen eingangs genannten Fahrgastsitz so auszubilden, daß seine Rückenlehne einerseits zur Einleitung großer Kräfte geeignet ist sowie andererseits innerhalb eines bestimmten Bereichs eine normale Biegesteifigkeit aufweist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung weist das erste Trägerelement eine höhere Biegesteifigkeit auf als das zweite Trägerelement. Ein erster Anschlag, gegen den das erste Trägerelement stößt, sowie ein zweiter Anschlag, gegen den das zweite Trägerelement stößt, sind vorgesehen, welche in Schwenkrichtung der Trägerelemente derart versetzt angeordnet sind, daß die Schwenkbewegung der Trägerelemente nur durch Anstoßen des zweiten Trägerelements gegen den zweiten Anschlag begrenzt wird und das erste Trägerelement erst nach Verformung des zweiten Trägerelements gegen den ersten Anschlag stößt. Hierdurch wird in vorteilhafter Weise erreicht, daß sich die Rückenlehne im Normalfall über das zweite Trägerelement gegen den zweiten Anschlag abstützt. Die Biegesteifigkeit der Rückenlehne wird daher zunächst durch die Biegesteifigkeit des zweiten Trägerelements bestimmt. Das erste Trägerelement stößt zunächst nicht gegen den ersten Anschlag, so daß es zunächst keinen Beitrag zur Biegesteifigkeit der Rückenlehne leistet. Da die Biegesteifigkeit der Rückenlehne somit zunächst nur durch die Biegesteifigkeit des zweiten Trägerelements bestimmt wird und die Biegesteifigkeit des zweiten Trägerelements nicht erhöht ist, ist die Biegesteifigkeit der Rückenlehne eines erfindungsgemäßen Fahrgastsitzes zunächst normal.

Durch eine von hinten an die Rückenlehne angreifende Kraft wird nach dem Anstoßen des zweiten Trägerelements an den zweiten Anschlag das zweite Trägerelement verformt, so daß die Rückenlehne nach vorne nachgibt. Die Rückenlehne gibt soweit nach vorne nach, bis das erste Trägerelement an den ersten Anschlag anstößt. Durch die erhöhte Biegesteifigkeit des ersten Trägerelements kann die Rükkenlehne im Bereich des ersten Trägerelements nach dem Anstoßen an den ersten Anschlag nicht weiter nach vorne nachgeben. Die Rückenlehne gibt daher lediglich im Bereich des zweiten Trägerelements weiter nach vorne nach. Sie schwenkt dann sozusagen um das erste Trägerelement.

Durch die erfindungsgemäße Ausbildung eines Fahrgastsitzes wird somit in vorteilhafter Weise erreicht, daß bei einem Aufprall von hinten auf die Rückenlehne die Rückenlehne zunächst um eine vorbestimmte Wegstrecke nachgibt. Diese Wegstrecke kann so eingestellt werden, daß sie ausreicht, daß eine auf sie auftreffende Person im wesentlichen unverletzt bleibt. Erst nachdem die als Knautschzone wirkende Wegstrecke zurückgelegt wurde, kommt das erste Trägerelement, welches eine höhere Biegesteifigkeit aufweist, als das zweite Trägerelement, zur Wirkung. Die Rückenlehne gibt dann im Bereich des ersten Trägerelements nicht weiter nach vorne nach.

Dadurch, daß jedoch das zweite Trägerelement keine erhöhte Biegesteifigkeit aufweist, gibt die Rückenlehne im Bereich des zweiten Trägerelements weiter nach. Die Rückenlehne vollzieht somit etwa eine Schwenkbewegung um das erste Trägerelement.

Da das erste Trägerelement ab einem gewissen Punkt nicht mehr nachgibt, ist es für die Einleitung von größeren Kräften geeignet. Es läßt sich daher in besonders vorteilhafter Weise als Befestigungspunkt für eine Umlenklasche eines Sicherheitsgurtes verwenden.

In besonders vorteilhafter Weise sind die beiden Trägerelemente als zweiarmige Hebel ausgebildet und die Anschläge an den dem Kopfbereich der Rückenlehne abgewandten Armen der Trägerelemente angeordnet. Hierdurch läßt sich die erfindungsgemäße Anordnung in besonders einfacher und wirksamer Weise realisieren. Denn die Anschläge können im Bereich des Sitzgestells angeordnet sein. Darüber hinaus läßt sich bei einer derartigen Anordnung auch sehr leicht die Verstellbarkeit der Rückenlehne erreichen.

Als besonders vorteilhaft hat sich auch eine Ausführungsform herausgestellt, bei der die beiden Trägerelemente im Kopfbereich der Rückenlehne über einen Querbügel miteinander verbunden sind. Durch den Querbügel wird die Stabilität der Rückenlehne weiter erhöht. Der Querbügel kann gerade verlaufen oder einen bogenförmigen Verlauf haben.

Als besonders vorteilhaft hat sich eine Ausführungsform der Erfindung herausgestellt, bei der ein Kraftaufnahmeelement vorgesehen ist, welches mit dem ersten Träger verbunden ist, und in welches durch Verschwenken der Rückenlehne ab dem Zeitpunkt eine Kraft eingeleitet wird, ab dem das zweite Trägerelement gegen den zweiten Anschlag stößt. Durch das Kraftaufnahmeelement kann in vorteilhafter Weise erreicht werden, daß ab dem Zeitpunkt, ab dem das zweite Trägerelement gegen den zweiten Anschlag stößt, auch das erste Trägerelement gegen eine Kraft verschwenkt wird. Durch entsprechende Dimensionierung des Kraftaufnahmeelements kann erreicht werden, daß die Kraft, gegen welche das erste Trägerelement verschwenkt wird, genauso groß ist, wie die Biegesteifigkeit des zweiten Trägerelements. Hierdurch ist der Widerstand, den die Rückenlehne einem auf sie aufprallenden Körper entgegensetzt, gleichmäßig, so daß sich zunächst eine gleichmäßige Schwenkbewegung um die Achse des Trägerelements ergibt. Erst ab dem Zeitpunkt, ab dem das erste Trägerelement gegen den ersten Anschlag stößt, geht die gleichmäßig nach vorne gerichtete Schwenkbewegung in eine Drehbewegung um das erste Trägerelement über.

Weitere Vorteile und Merkmale der vorliegenden Erfindung ergeben sich aus der nachfolgenden Beschreibung eines besonderen Ausführungsbeispiels unter Bezugnahme auf die Zeichnung.

Es zeigt
- Fig. 1: eine schematische Darstellung eines erfindungsgemäß ausgebildeten Fahrgastsitzes,
- Fig. 2 bis Fig. 4: unterschiedliche Stellungen beziehungsweise Zustände der Trägerelemente, und
- Fig. 5 bis Fig. 7: unterschiedliche Stellungen beziehungsweise Zustände eines Kraftaufnahmeelements.

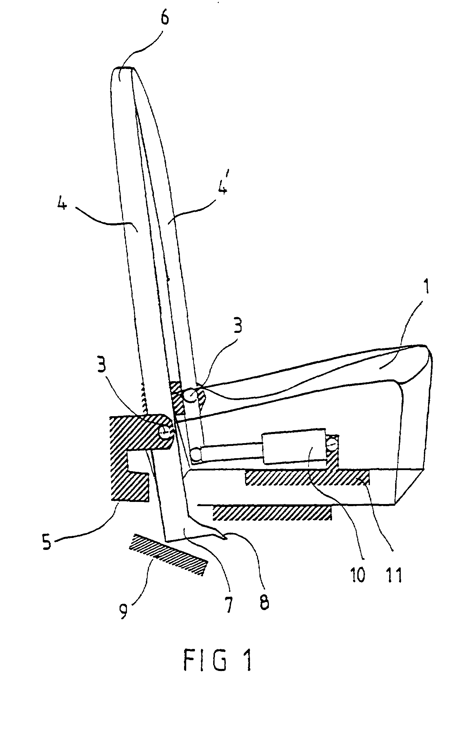

Wie der Figur 1 entnommen werden kann, weist ein erfindungsgemäßer Fahrgastsitz ein Sitzteil 1 auf, an welchem ein bogenförmiges Gestell 4, 4', 6 einer Rückenlehne befestigt ist. Das Gestell 4, 4', 6 besteht aus zwei stabförmigen Trägerelementen 4, 4', welche im Kopfbereich der Rückenlehne mittels eines Bogens 6 miteinander verbunden sind. Das erste stabförmige Trägerelement 4 ist massiver ausgebildet als das zweite stabförmige Trägerelement 4' und weist daher eine höhere Biegesteifigkeit auf. Die beiden Trägerelemente 4, 4' sind um eine Achse 3 schwenkbar mit dem Sitzteil 1 verbunden.

Am unteren Ende des ersten Trägerelements 4 ist ein Anschlag 5 angeordnet, welcher in der Figur 1 schematisch dargestellt ist. Das erste Trägerelement 4 weist des weiteren an seinem unteren Ende ein Kraftaufnahmeelement 7 auf. Das Kraftaufnahmeelement 7 ist wie ein Fuß ausgebildet mit einer leicht abgewinkelten Nase 8. Es besteht aus Stahlblech. Unterhalb des Kraftaufnahmeelements 7 ist eine Auflageplatte 9 angeordnet, welche in der Figur 1 schematisch dargestellt ist.

Das zweite Trägerelement 4' ist an seinem unteren Ende mit einer Gasdruckfeder 10 verbunden. Mittels der Gasdruckfeder 10 läßt sich die Neigung des zweiten Trägerelements 4' und damit des über den Bügel 6 mit dem zweiten Trägerelement 4' verbundene ersten Trägerelements 4 einstellen.

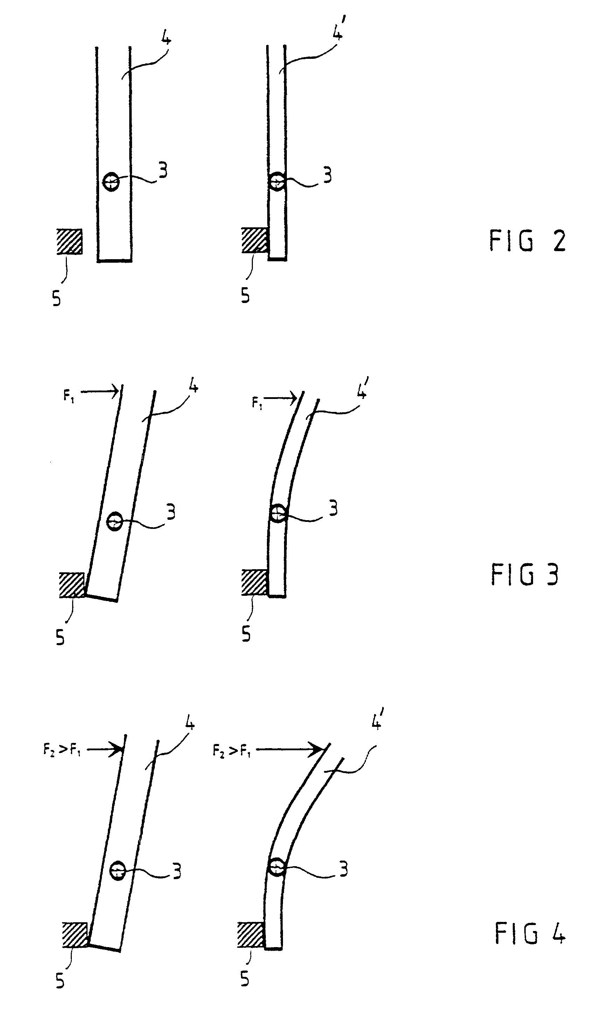

Die Wirkungsweise des erfindungsgemäßen Fahrgastsitzes wird nun anhand der Figuren 2 bis 4 beschrieben. Die in Figur 2 dargestellte Betriebsstellung stellt den normalen Betriebsfall bei aufrecht gestellter Rückenlehne dar. In diesem Betriebszustand wird die Stellung der Rückenlehne durch den zweiten Anschlag 5', gegen den das zweite Trägerelement 4' stößt, begrenzt. Das erste Trägerelement 4 stößt in diesem Betriebszustand nicht gegen den ersten Anschlag 5.

Bei dem in Figur 3 dargestellten Betriebszustand greift auf die Rückenlehne von hinten eine Kraft F1 an. Hierdurch wird das zweite Trägerelement 4' verformt. Das erste Trägerelement 4 führt eine der Verformung des zweiten Trägerelements 4' entsprechende Schwenkbewegung aus. Die Schwenkbewegung erfolgt solange, bis das erste Trägerelement 4 an den ersten Anschlag 5 anstößt.

Vergrößert sich die von hinten an die Rückenlehne angreifende Kraft, wie dies in der Figur 4 dargestellt ist, findet eine weitere Verformung des zweiten Trägerelements 4' statt. Die Kraft ist jedoch nicht so groß, daß das erste Trägerelement 4 verformt wird. Es findet daher eine Schwenkbewegung der Rückenlehne um das erste Trägerelement 4 statt.

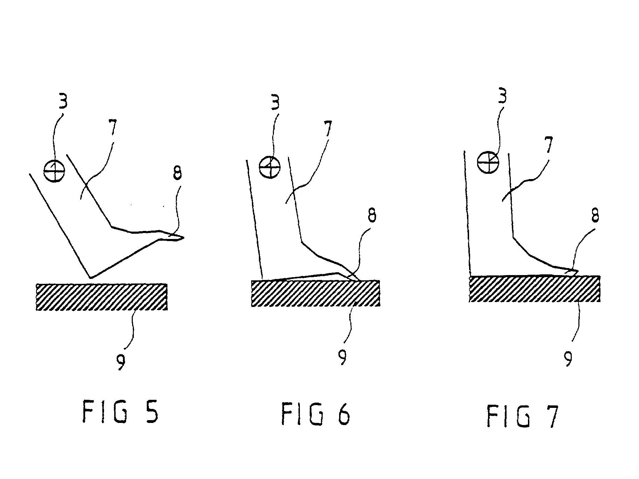

Anhand der Figuren 5 bis 7 wird nun die Wirkungsweise des Kraftaufnahmeelements 7 dargestellt. Der in Figur 5 dargestellte Zustand entspricht einer nach hinten geneigten Rückenlehne. Das Kraftaufnahmeelement 7 hat keine Berührungspunkte mit der Auflageplatte 9. Bei der in Figur 6 dargestellten Stellung ist die Rückenlehne senkrecht gestellt, das heißt, das zweite Trägerelement 4' stößt an den zweiten Anschlag 5' an. Die in Figur 7 dargestellte Stellung wird erreicht wenn, wie bereits beschrieben, das zweite Trägerelement 4' durch Krafteinwirkung von hinten auf die Rückenlehne verformt wird. Das erste Trägerelement 4 schwenkt dann weiter nach vorne, wodurch sich die Nase 8 des Kraftaufnahmeelements 7 verbiegt. Die Form der Nase 8 beziehungsweise des Kraftaufnahmeelements 7 ist so gewählt, daß das Kraftaufnahmeelement 7 vollständig auf der Aufnahmeplatte 9 aufliegt, wenn das erste Trägerelement 4 an den ersten Anschlag 5 anstößt. Durch die Dicke des Stahlbleches beziehungsweise die Form der Nase 8 kann die Kraft eingestellt werden, welche einer Verschwenkung des ersten Trägerelements 4 bis zum ersten Anschlag 5 entgegenwirkt.

## Patentansprüche

1. Fahrgastsitz für ein Personenbeförderungsfahrzeug, mit einem Sitzteil (1) und einer Rückenlehne, welche zwei um eine Achse (3) schwenkbar angeordnete stabförmige Trägerelemente (4, 4') aufweist, von denen wenigstens eines zur Begrenzung der Schwenkbewegung gegen einen Anschlag (5, 5') stößt,
**dadurch gekennzeichnet,**
**daß** das erste Trägerelement (4) eine höhere Biegesteifigkeit aufweist als das zweite Trägerelement (4') und ein erster Anschlag (5), gegen den das erste Trägerelement (4) stößt, sowie ein zweiter Anschlag (5'), gegen den das zweite Trägerelement 4') stößt, vorgesehen sind, welche in Schwenkrichtung derart versetzt angeordnet sind, daß die Schwenkbewegung der Rückenlehne nur durch Anstoßen des zweiten Trägerelements (4') gegen den zweiten Anschlag (5') begrenzt wird, und das erste Trägerelement (4) erst nach Verformung des zweiten Trägerelements (4') gegen den ersten Anschlag (5) stößt.

2. Fahrgastsitz nach Anspruch 1,
**dadurch gekennzeichnet,**
**daß** die beiden Trägerelemente (4, 4') als zweiarmige Hebel ausgebildet sind und die Anschläge (5, 5') an den dem Kopfbereich der Rückenlehne abgewandten Armen der Trägerelemente (4, 4') angeordnet sind.

3. Fahrgastsitz nach Anspruch 1 oder 2,
**dadurch gekennzeichnet,**
**daß** die beiden Trägerelemente (4, 4') im Kopfbereich der Rückenlehne über einen Querbügel (6) miteinander verbunden sind.

4. Fahrgastsitz nach einem der Ansprüche 1 bis 3,
**dadurch gekennzeichnet,**
**daß** ein Kraftaufnahmeelement (7) vorgesehen ist, welches mit dem ersten Träger (4) derart verbunden ist, daß der erste Träger (4) durch Verschwenken der Rückenlehne ab dem Zeitpunkt eine Kraft in das Kraftaufnahmeelement (7) leitet, ab dem das zweite Trägerelement (4') gegen den zweiten Anschlag (5') stößt.

5. Fahrgastsitz nach Anspruch 4,
**dadurch gekennzeichnet,**
**daß** sich das Kraftaufnahmeelement (7) solange verformt, bis das erste Trägerelement (4) gegen den ersten Anschlag (5) stößt.

## Claims

1. Passenger seat for a passenger transport vehicle, having a seat portion (1) and a backrest having two rod-shaped support elements (4, 4') arranged tiltable about one axis (3), of which at least one comes to rest against a stop (5, 5') for limiting the tilting movement, **characterised in that** the first support element (4) has a greater bending stiffness than the second support element (4') and a first stop (5) against which the first support element (4) comes to rest and a second stop (5') against which the second support element (4') comes to rest are provided, these being arranged offset in the tilting direction such that the tilting movement of the backrest is limited only by the second support element (4') coming to rest against the second stop (5'), and the first support element (4) only comes to rest against the first stop (5) after deformation of the second support element (4').

2. Passenger seat according to Claim 1, **characterised in that** the two support elements (4, 4') are designed as two-armed levers and the stops (5, 5') are arranged on the arms of the support elements (4, 4') pointing away from the head region of the backrest.

3. Passenger seat according to Claim 1 or 2, **characterised in that** the two support elements (4, 4') are linked to each other in the head region of the backrest via a transverse bracket (6).

4. Passenger seat according to one of the Claims 1 to 3, **characterised in that** a force absorbing element (7) is provided which is linked to the first support (4) such that the first support (4) conducts a force into the force absorbing element (7) by tilting of the backrest from the time point when the second support element (4') comes to rest against the second stop (5').

5. Passenger seat according to Claim 4, **characterised in that** the force absorbing element (7) continues to be deformed until the first support element (4) comes to rest against the first stop (5).

## Revendications

1. Siège passager pour un véhicule de transport de personnes, comprenant une partie formant siège ou assise (1) et un dossier, qui comporte deux éléments de support (4, 4') en forme de tiges, agencés de manière pivotante autour d'un axe (3), parmi lesquels au moins un élément vient heurter contre une butée (5, 5') en vue de limiter le mouvement de pivotement, **caractérisé en ce que** le premier élément de support (4) possède une résistance à la flexion supérieure à celle du deuxième élément de support (4') et qu'il est prévu une première butée (5), contre laquelle vient heurter le premier élément de support (4), ainsi qu'une deuxième première butée (5'), contre laquelle vient heurter le deuxième élément de support (4'), lesquelles sont décalées dans le sens de pivotement, de telle sorte que le mouvement de pivotement du dossier est limité uniquement par la mise en contact du deuxième élément de support (4') contre la deuxième butée (5'), et que le premier élément de support (4) vient heurter contre la première butée (5) uniquement après déformation du deuxième élément de support (4').

2. Siège passager selon la revendication 1, **caractérisé en ce que** les deux éléments de support (4, 4') sont conçus sous forme de levier à deux bras et les butées (5, 5') sont agencées au niveau des bras des éléments de support (4, 4') opposés à la zone supérieure du dossier.

3. Siège passager selon la revendication 1 ou 2, **caractérisé en ce que** les deux éléments de support (4, 4') sont reliés l'un à l'autre dans la zone supérieure du dossier par l'intermédiaire d'une traverse (6).

4. Siège passager selon l'une quelconque des revendications 1 à 3, **caractérisé en ce qu'**il est prévu un élément d'absorption de force (7), qui est relié au premier support (4), de telle sorte que le premier support (4), sous l'effet du pivotement du dossier, transmet une force dans l'élément d'absorption de force (7) dès le moment à partir duquel le deuxième élément de support (4') heurte contre la deuxième butée (5').

5. Siège passager selon la revendication 4, **caractérisé en ce que** l'élément d'absorption de force (7) se déforme jusqu'à ce que le premier élément de support (4) vienne heurter contre la première butée (5).
